# EUROPEAN PATENT APPLICATION

(11) **EP 4 478 487 A1**
(43) Date of publication of application: **18.12.2024**
(21) Application number: 22960355.0
(22) Date of filing: 30.09.2022
(51) Int. Cl.: H01M 10/6556, H01M 10/6567, H01M 10/613

(54) **BATTERY AND ELECTRIC APPARATUS**

(71) Applicant: Contemporary Amperex Technology (Hong Kong) Limited, Central, Central And Western District (HK)
(72) Inventor: ZHOU, Cong, Ningde, Fujian 352100 (CN); HUANG, Xiaoteng, Ningde, Fujian 352100 (CN); XU, Chenyi, Ningde, Fujian 352100 (CN)
(74) Representative: Ziebig Hengelhaupt Intellectual Property Attorneys Patentanwaltskanzlei PartGmbB
(86) International application number: PCT/CN2022/123426
(87) International publication number: WO 2024/065739

(57) **Abstract**

The application discloses a battery and an electric device. The battery includes a battery cell and a thermal runaway management assembly. The battery cell has a pressure relief mechanism. The thermal runaway management assembly includes a first conduit, and at least a part of an orthographic projection of the first conduit onto the battery cell falls within a range of the pressure relief mechanism. The first conduit is used to accommodate a protective medium, and the first conduit is configured to be actuated when the battery cell discharges a substance via the pressure relief mechanism, so as to discharge the protective medium towards the pressure relief mechanism. The above structure can effectively improve the safety performance of the battery.

## Description

### TECHNICAL FIELD

The application relates to the field of battery, and in particular to a battery and an electric device.

### BACKGROUND

Batteries are widely used in a variety of electronic equipments such as mobile phones, laptop computers, electric bicycles, electric automobiles, electric aircrafts, electric ships, electric toy cars, electric toy ships, electric toy planes, and electric tools etc. Batteries may include nickel-cadmium batteries, nickel-hydrogen batteries, lithium-ion batteries, secondary alkaline zinc-manganese batteries etc.

At present, besides improving the cycle performance and charge-discharge efficiency of the batteries, how to improve the safety performance of the batteries is also one of the research directions in the field.

### SUMMARY

In view of the above problems, the application provides a battery and an electric device, which can reduce the temperature of a substance released from a pressure relief mechanism and effectively improve the safety performance of the battery.

In a first aspect, the application provides a battery including a battery cell and a thermal runaway management assembly. The battery cell has a pressure relief mechanism. The thermal runaway management assembly includes a first conduit, and at least a part of an orthographic projection of the first conduit onto the battery cell falls within a range of the pressure relief mechanism. The first conduit is used to accommodate a protective medium, and the first conduit is configured to be actuated when the battery cell discharges a substance via the pressure relief mechanism, so as to discharge the protective medium towards the pressure relief mechanism.

In the technical solution of the embodiments of the application, by providing the pressure relief mechanism in the battery cell, a part of the substance can be discharged when the internal pressure of the battery cell exceeds a preset value, so as to protect a single battery cell. Also, the first conduit of the thermal runaway management assembly may discharge the protective substance to the pressure relief mechanism during thermal runaway of the battery cell, so as to timely cool down the high-temperature substance released from the pressure relief mechanism. Further, at least a part of the orthographic projection of the first conduit onto the battery cell falls within a range of the pressure relief mechanism, so that the substance discharged by the battery cell via the pressure relief mechanism can act on the first conduit quickly, so as to actuate the first conduit timely and improve the efficiency of actuation of the first conduit. The above technical solution reduces a damage of the high-temperature substance discharged in the pressure relief mechanism to other normally operating battery cells in the battery, and reduces a risk of explosion or short circuit of the battery caused by the high-temperature substance, thereby effectively improving the safety performance of the battery.

In some embodiments of the application, the battery includes a plurality of battery cells successively arranged in a first direction. In the above technical solution, the extending direction of the first conduit is the same as the arrangement direction of the plurality of battery cells, and the first conduit can face towards the pressure relief mechanisms of a plurality of battery cells at the same time; in other words, one first conduit can protect a plurality of battery cells, thereby improving the safety of the battery and simplifying the structure of the thermal runaway management assembly. The first conduit can break when the pressure relief mechanism releases a substance, improving the efficiency of releasing the protective medium, reducing the damage of the high-temperature substance released from the battery cell to other normally operating battery cells, and further improving the safety performance of the battery.

In some embodiments of the application, the first conduit is made of polypropylene or polyvinyl chloride material. The above material will melt rapidly at a high temperature, and can release the protective medium in time so as to suppress thermal runaway of the battery, thereby improving the safety performance of the battery.

In some embodiments, the battery includes a plurality of battery units arranged in a second direction, each of the battery units includes a plurality of battery cells arranged in the first direction, and the first direction and the second direction intersect with each other; an amount of the first conduits is plural, and each of the battery units corresponds to at least one of the first conduits.

In the above technical solution, the plurality of battery cells are arranged in an array, so that the maximum external dimension of the battery can be reduced as far as possible and the space utilization rate can be improved on condition that the capacity of the battery is consistent. The plurality of first conduits may provide safety protection for the battery cells of the plurality of battery units, so as to improve the safety of the battery. In the above structure, the first conduit may be arranged in the first direction to be aligned with the pressure relief mechanism of each battery cell, and a plurality of first conduits may be arranged in the second direction to prevent mutual interference between the conduits, so that the space inside the battery is effectively utilized, and the volumetric energy density of the battery is ensured while the protection effect of the thermal runaway management assembly is ensured.

In some embodiments, the thermal runaway management assembly further includes a second conduit arranged in the second direction, and the second conduit is connected to ends in the first direction of two adjacent first conduits. The second conduit is provided to connect a plurality of first conduits, facilitating the protective medium circulating among the plurality of first conduits.

In some embodiments, the first conduit includes two strip portions arranged in a third direction and an arc portion connected to ends in the second direction of the strip portions, and the third direction intersects with the first direction and the second direction respectively; at least a part of the strip portions is configured to break at a preset temperature so as to spray the protective medium to the pressure relief mechanism, and one of the strip portions is arranged to face towards the pressure relief mechanism in the third direction.

The strip portions and the arc portion together enclose a passage for accommodating the protective medium. The strip portion can expand the extension width of the first conduit in the second direction, thereby increasing the inner diameter of the first conduit and increasing the medium flow rate of the first conduit. The arc portion is used to connect the two strip portions, disperse the stress of the fluid in the strip portions, increase the flow speed of the protective medium in the first conduit, and ensure the timely discharge of the protective medium. Further, the strip portion is arranged to face towards the pressure relief mechanism in the third direction, so that the protective medium can be directly sprayed to the pressure relief mechanism for cooling protection to improve protection effect.

In some embodiments, an extension width L of the battery cell in the second direction and an extension width W of the first conduit in the second direction satisfy a relationship of: 0.8W≤L≤W.

If the width of the first conduit in the second direction is too narrow, it can not accommodate a sufficient volume of protective medium and can not effectively cover the pressure relief mechanism, so that the protection effect of the first conduit cannot meet the requirement; if the width of the first conduit in the second direction is too wide, the occupied space will be increased and the flow rate of the protective medium will be increased, resulting in a decrease in the energy density of the battery. Therefore, the above technical solution limits the extension width W of the first conduit within a reasonable range, so that the energy density of the battery can be ensured while the protection effect of the first conduit is ensured.

In some embodiments, a maximum height H of the first conduit in the third direction and the extension width W of the first conduit in the second direction satisfy a relationship of: 3H≤W≤6H.

If the extension width W of the first conduit is equal to or less than 3H, the extension width of the first conduit is too small to accommodate enough protective medium, and the protective effect is poor, and if the maximum height of the first conduit in the third direction is too large, it will take up the space in the battery, reducing the energy density of the battery. If the extension width W of the first conduit is equal to or greater than 6H, the extension width of the first conduit is excessively large, causing the reserve of the protective medium to exceed the demand to reduce the energy density of the battery, and the fluid resistance in the first conduit becomes larger, reducing the flow speed of the protective medium and deteriorating the protective effect. Therefore, by limiting the above maximum height H and the extension width W within a reasonable range, a sufficient volume of protective medium accommodated in the first conduit can be ensured, the cooling speed of the battery cell can be ensured, and meanwhile the height of the first conduit is limited, so that the space occupied by the first conduit is more reasonable, and the energy density of the battery is ensured while the protective effect is improved.

In some embodiments, the thermal runaway management assembly further includes first support members, the first support members are connected to two ends in the first direction of the first conduit, and the first support members are arranged between the battery cells and the first conduit so as to space the first conduit apart from the battery cells by a preset distance. In the above technical solution, by providing the first support members, a preset distance is formed between the first conduit and the battery cells, so as to provide a space for the pressure relief mechanism to discharge a substance, prevent the pressure relief mechanism from being restricted in actuation and ensure proper operation of the pressure relief mechanism.

In some embodiments, the thermal runaway management assembly further includes a second support member arranged between two first support members, and the second support member is used to support the first conduit. The second support member is used to support the first conduit and restrict the movement of the first conduit towards the battery cell.

In some embodiments, the second support member includes: a connection portion and a support portion. The connection portion extends in the first direction and is connected to at least a part of the first conduit. The support portion is arranged between the battery cell and the first conduit. Two ends of the support portion are connected to the connection portion and the battery cell respectively, so as to space the first conduit apart from the battery cell by a preset distance. The connection portion can be stably connected to the first conduit, and the support portion is connected to the connection portion to support the first conduit and the battery cell to be spaced apart from each other by a preset distance. The above structure can facilitate the installation and replacement of the second support member. By providing the second support member, the deformation of the first conduit is limited to a certain extent, and during installation of the thermal runaway management assembly, the first conduit and the second support member may be pre-assembled and then installed into the battery, thereby effectively improving the installation efficiency of the thermal runaway management assembly.

In some embodiments, the battery further includes a thermal management assembly for accommodating a cooling medium for heat exchange of the battery cell, and the thermal runaway management assembly is in communication with the thermal management assembly and uses the cooling medium as the protective medium. The thermal management assembly is in communication with the thermal runaway management assembly and uses the cooling medium for protection, so that the convenience of protection can be improved while the safety performance of the battery is improved.

In a second aspect, the embodiments of the application further provide an electric device including the battery in the above embodiments, and the battery is used to provide electrical energy.

The above description is only an overview of the technical solution of the application, which, in order to understand the technical means of the application more clearly, can be implemented according to the content of the description, and for better understanding of the above and other objects, features and advantages of the application, the detailed embodiments of the application will be set forth below.

### BRIEF DESCRIPTION OF THE DRAWINGS

In order to illustrate the technical solutions in the implementations of the application more clearly, the drawings to be used in the implementations of the application will be briefly described below. Obviously, the drawings described below are merely some implementations of the application, and it is also possible for a person of ordinary skill in the art to obtain further drawings from these drawings without creative work.
Fig. 1 is a schematic structural view of a vehicle provided by some embodiments of the application;
Fig. 2 is a schematic explosive view of a battery provided by some embodiments of the application;
Fig. 3 is a schematic explosive view of a battery cell in a battery provided by some embodiments of the application;
Fig. 4 is a schematic structural view of a thermal runaway management assembly provided by some embodiments of the application;
Fig. 5 is a schematic structural view of a battery unit in a battery provided by some embodiments of the application;
Fig. 6 is a schematic structural view of a cross section of a first conduit provided by some embodiments of the application;
Fig. 7 is a schematic enlarged view of a circle A of Fig. 2;
Fig. 8 is a schematic structural view of a thermal runaway management assembly provided by some further embodiments of the application;
Fig. 9 is a schematic enlarged view of a circle B of Fig. 8;
Fig. 10 is a schematic explosive view of a battery provided by some further embodiments of the application.

The views are not necessarily plotted in actual proportion in the drawings.

1, vehicle; 10, electrode unit; 11, electrode assembly; 2, battery; 20, housing body; 21, opening; 24, pressure relief mechanism; 25, electrode terminal; 3, controller; X, first direction; Y, second direction; Z, third direction; 4, motor; 5, case; 51, first portion; 52, second portion; 53, accommodation space; 6, battery unit; 7, battery cell; 8, thermal runaway management assembly; 801, first conduit; 802, second conduit, 803, strip portion; 804, arc portion; 805, first support member; 806, connection portion; 807, support portion; 808, second support member; 9, thermal management assembly.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of' in the application means two or more (including two).

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application. The battery cell may be in the form of a cylinder, a flat body, a cuboid, or other shape, which is not limited by the embodiments of the application. The battery cell are generally divided into three types in terms of packaging manner: cylindrical battery cell, cuboid battery cell and soft-pack battery cell, which is not limited by the embodiments of the application.

The battery mentioned in the embodiments of the application refers to a single physical module including one or more battery cells to provide higher voltage and capacity. For example, the battery mentioned in the application may include a battery cell or a battery pack or the like. The battery generally includes a housing for packaging one or more battery cells. The housing can prevent liquid or other foreign matter from affecting the charging or discharging of the battery cell.

The battery cell includes an electrode unit and electrolyte, and the electrode unit includes at least one electrode assembly including a positive electrode sheet, a negative electrode sheet and a separator. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting portion and a positive electrode protrusion protruding from the positive electrode current collecting portion. The positive electrode current collecting portion is coated with a positive electrode active material layer. At least a part of the positive electrode protrusion is not coated with the positive electrode active material layer. The positive electrode protrusion serves as a positive electrode tab. Taking a lithium ion battery as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting portion and a negative electrode protrusion protruding from the negative electrode current collecting portion. The negative electrode current collecting portion is coated with a negative electrode active material layer. At least a part of the negative electrode protrusion is not coated with the negative electrode active material layer. The negative electrode protrusion serves as a negative electrode tab. The material of the negative electrode current collector may be copper, the negative electrode active material layer includes a negative electrode active material, and the negative electrode active material may be carbon, silicon, or the like. In order to ensure that a large current doe not cause fusing, there are a plurality of positive electrode tabs stacked together, and there are a plurality of negative electrode tabs stacked together. The material of the separator may be PP (polypropylene) or PE (polyethylene) or the like. In addition, the electrode assembly may be of a wound structure or a laminated structure, which is not limited by the embodiments of the application.

For ease of description, the following embodiments take a vehicle as an example of the electric device for explanation.

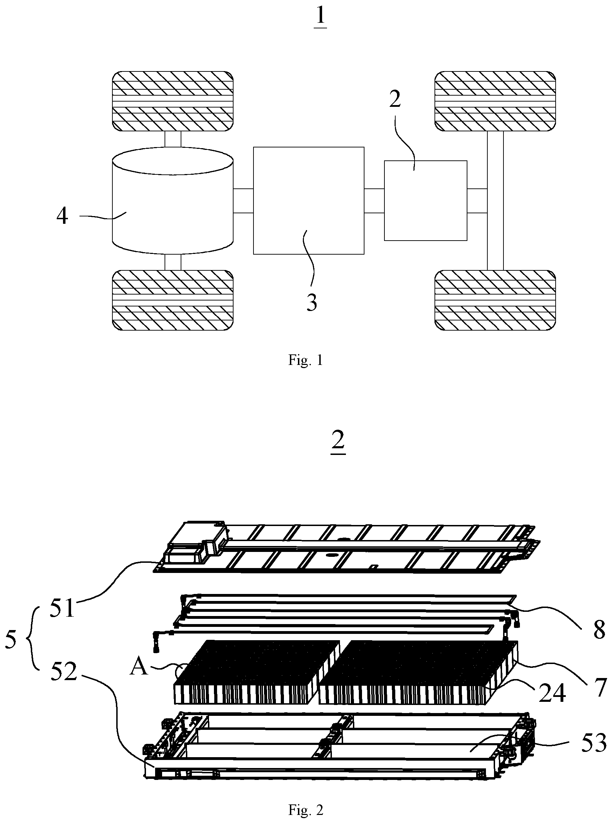

Fig. 1 is a schematic structural view of a vehicle provided by some embodiments of the application. As shown in Fig. 1, a battery 2 is provided inside the vehicle 1, and the battery 2 may be disposed at a bottom or a head or a rear of the vehicle 1. The battery 2 may be used for powering the vehicle 1. For example, the battery 2 may serve as an operational power source for the vehicle 1.

The vehicle 1 may also include a controller 3 and a motor 4. The controller 3 is used for controlling the battery 2 to power the motor 4, for example, for operational power requirements during start-up, navigation and traveling of the vehicle 1.

In some embodiments of the application, the battery 2 may serve not only as an operational power source for the vehicle 1, but also as a drive power source for the vehicle 1 to provide a drive power for the vehicle 1 instead of or partially instead of fuel or natural gas.

Fig. 2 is a schematic explosive view of a battery provided by some embodiments of the application. As shown in Fig. 2, the battery 2 includes a case 5 and a battery unit 6 composed of a plurality of battery cells 7, and the battery unit 6 is accommodated in the case 5.

The case 5 is used for accommodating the battery cell, and the case 5 may have various structures. In some embodiments, the case 5 may include a first portion 51 and a second portion 52 capped by each other. The first portion 51 and the second portion 52 together define an accommodation space 53 for accommodating the battery cells. The second portion 52 may be of a hollow structure with one end open, the first portion 51 is of a plate-like structure, and the first portion 51 caps the open side of the second portion 52 so as to form the case 5 with the accommodation space 53. Also, each of the first portion 51 and the second portion 52 may be of a hollow structure with one side open, and the open side of the first portion 51 caps the open side of the second portion 52 so as to form the case 5 with the accommodation space 53. Of course, the first portion 51 and the second portion 52 may have various shapes, such as a cylinder, a cuboid and the like.

In order to increase the seal property after the first portion 51 and the second portion 52 are connected, a seal member, such as seal glue or a seal ring, may be provided between the first portion 51 and the second portion 52.

Provided that the first portion 51 is capped on the top of the second portion 52, the first portion 51 may also be referred to as an upper case cover, and the second portion 52 may also be referred to as a lower case body.

In the battery 2, the amount of battery cell 7 may be single or plural. If there are a plurality of battery cells 7, the plurality of battery cells 7 may be connected in series or in parallel or in a mixed manner, wherein the mixed manner means that the plurality of battery cells 7 are connected both in series and in parallel. The plurality of battery cells 7 may be directly connected together in series or in parallel or in the mixed manner, and then the entirety constituted by the plurality of battery cells 7 is accommodated in the case 5. Of course, the plurality of battery cells 7 may also be connected in series or in parallel or in the mixed manner to form battery units 6 at first, and then a plurality of battery units 6 are connected in series or in parallel or in the mixed manner to form an entirety and are accommodated in the case 5.

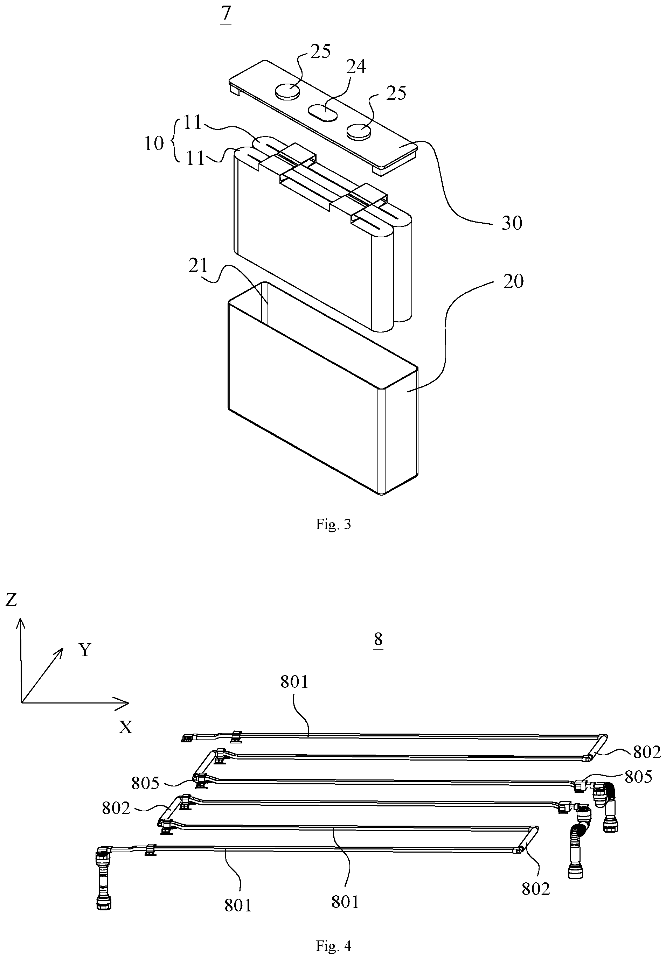

Fig. 3 is a schematic explosive view of a battery cell provided by some embodiments of the application. In some embodiments, there are a plurality of battery cells 7, and the plurality of battery cells 7 are connected in series or in parallel or in the mixed manner to form battery units at first. Then a plurality of battery units 6 are connected in series or in parallel or in the mixed manner to form an entirety and are accommodated in the case.

The plurality of battery cells 7 in a battery unit may be electrically connected by a bus member to achieve a parallel or series or mixed connection of the plurality of battery cells 7 in the battery unit.

The battery cell 7 of the embodiments of the application includes an electrode unit 10, a housing body 20 and an end cap assembly 30. The housing body 20 has an opening 21, the electrode unit 10 is accommodated in the housing body 20, and the end cap assembly 30 is used to connect the housing body 20 and to be capped to the opening 21.

The electrode unit 10 includes at least one electrode assembly 11. For example, the electrode unit 10 in Fig. 3 includes two electrode assemblies 11. The electrode assembly 11 includes a positive electrode sheet, a negative electrode sheet and a separator. The electrode assembly 11 may be a wound electrode assembly, a laminated electrode assembly, or an electrode assembly in other form.

The electrode unit 10 includes at least one electrode assembly 11. That is, in the battery cell 7, the amount of electrode assembly 11 accommodated in the housing body 20 may be single or plural.

The battery cell 7 generally includes a housing 70. The housing 70 includes a housing body 20 and an end cap assembly 30. The housing body 20 is of a hollow structure with one side open. The end cap assembly 30 is capped at the opening of the housing body 20 and forms a sealed connection so as to form an accommodation cavity for accommodating the electrode unit 10 and the electrolyte.

The end cap assembly 30 further includes an electrode terminal 25. In some embodiments, two electrode terminals 25 are provided, and the two electrode terminals 25 are defined as a positive electrode terminal and a negative electrode terminal respectively. The positive electrode terminal and the negative electrode terminal are used to be electrically connected to the positive electrode tab portion and the negative electrode tab portion of the electrode assembly 11, respectively, so as to output a current generated by the electrode assembly 11.

The end cap assembly 30 further includes a pressure relief mechanism 24 for relieving an internal pressure or temperature of the battery cell 7 when the internal pressure or temperature of the battery cell 7 reaches a preset value. For example, the pressure relief mechanism 24 is located between the positive electrode terminal and the negative electrode terminal, and the pressure relief mechanism 24 may be a component such as an explosion-proof valve, an explosion-proof sheet, an air valve, a pressure relief valve, or a safety valve.

In some embodiments, the housing body 20 may also be of a hollow structure with the two opposite sides open. The end cap assemblies 30 consist of two end cap assemblies 30. The two end cap assemblies 30 are capped at two openings of the housing body 20 and form a sealed connection respectively so as to form an accommodation cavity for accommodating the electrode unit 10 and the electrolyte. In some examples, the positive electrode terminal and the negative electrode terminal may be mounted on one and the same end cap assembly 30. In some other examples, the positive electrode terminal and the negative electrode terminal are mounted on two end cap assemblies 30 respectively.

In the battery cell 7, when the temperature and pressure inside the battery cell 7 exceed a threshold value, the pressure relief mechanism 24 will be actuated and discharge the gas or liquid inside the battery cell 7, so as to prevent the battery cell 7 from exploding. However, during use, the inventors have found that the pressure relief mechanism 24 will release a large amount of heat when discharging a substance, resulting in a rapid increase in the internal temperature of the case of the battery 2. Moreover, the temperature of the discharged substance is relatively high, which may cause damage to the case of the battery 2 or other battery cells 7 around the battery cell 7.

In view of the above problems, the inventors have devised a battery, wherein by a thermal runaway management assembly provided in the battery cell 7, a first conduit of the thermal runaway management assembly may discharge a protective substance to the pressure relief mechanism during thermal runaway of the battery cell, so as to timely cool down the high-temperature substance released from the pressure relief mechanism. Further, at least a part of the orthographic projection of the first conduit onto the battery cell falls within a range of the pressure relief mechanism, so that the substance discharged by the battery cell via the pressure relief mechanism can act on the first conduit quickly, so as to actuate the first conduit timely and improve the efficiency of actuation of the first conduit. The above technical solution reduces a damage of the high-temperature substance discharged in the pressure relief mechanism to other normally operating battery cells in the battery, and reduces a risk of explosion or short circuit of the battery caused by the high-temperature substance, thereby effectively improving the safety performance of the battery.

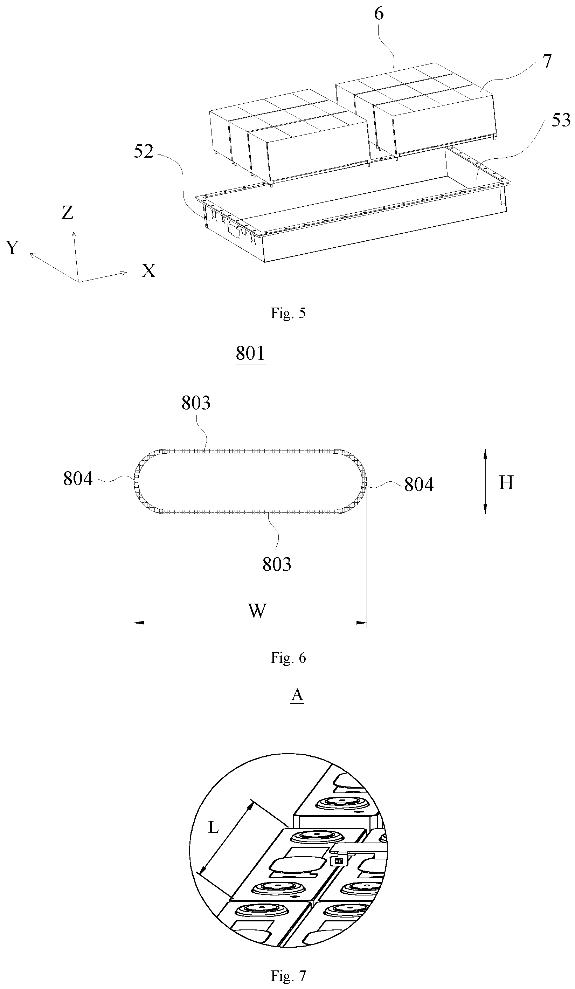

Please continue to make reference to Figs. 4-7. Fig. 4 is a schematic structural view of a thermal runaway management assembly 8 provided by some embodiments of the application; Fig. 5 is a schematic structural view of a battery unit 6 in a battery 2 provided by some embodiments of the application; Fig. 6 is a schematic structural view of a cross section of a first conduit 801 provided by some embodiments of the application; Fig. 7 is a schematic enlarged view of a circle A of Fig. 2.

Referring to Figs. 2 to 4, the battery 2 in the embodiments of the application includes a battery cell 7 and a thermal runaway management assembly 8. The battery cell 7 has a pressure relief mechanism 24. The thermal runaway management assembly 8 includes a first conduit 801, and at least a part of an orthographic projection of the first conduit 801 onto the battery cell 7 falls within a range of the pressure relief mechanism 24. The first conduit 801 is used to accommodate a protective medium, and the first conduit 801 is configured to be actuated when the battery cell 7 discharges a substance via the pressure relief mechanism 24, so as to discharge the protective medium towards the pressure relief mechanism 24.

In particular, the pressure relief mechanism 24 may be a pressure relief valve that is actuated when the internal pressure of the battery cell 7 reaches a threshold value to discharge the gas and liquid of high temperature and high pressure inside the battery cell 7.

The thermal runaway management assembly 8 has a accommodation cavity for accommodating the protective medium. The accommodation cavity may be an enclosed space, and the protective medium may be enclosed in the accommodation cavity. The accommodation cavity may also be provided with a medium inlet and a medium outlet. The medium inlet may be communicated with a protective medium supply source, and the medium outlet may also be communicated with a protective medium storage device. The above structure may enable circulation of the protective medium in the accommodation cavity so as to increase the supply amount of the protective medium in case of thermal runaway. The thermal runaway management assembly 8 is disposed in the case 5 of the battery, and the shape of the thermal runaway management assembly 8 is adapted to the shape of the case 5 of the battery. For example, when the battery case is cuboid, the thermal runaway management assembly 8 may be provided in a square plate-like structure, and when the battery case is cylindrical, the thermal runaway management assembly 8 may be provided in a circular-like structure or a ring-like structure, which can make full use of the space inside the case 5 of the battery.

The first conduit 801 is used to accommodate the protective medium. The protective medium may be water or other flame retardant liquid, for cooling down the battery cell 7 and preventing the substance sprayed from the pressure relief mechanism 24 from causing combustion or secondary damage to the battery cell 7 or the case 5 of the battery 2. An electrically operated valve or other actuated switch may be provided on the first conduit 801 to release the protective medium in the first conduit 801 when necessary to provide protection for the battery 2. At least a part of an orthographic projection of the first conduit 801 onto the battery cell 7 falls within a range of the pressure relief mechanism 24. It can be ensured that the protective medium in the first conduit 801 is at least partially directly released to the pressure relief mechanism 24, so as to improve the protection efficiency of the pressure relief mechanism 24.

In the technical solution of the embodiments of the application, by providing the pressure relief mechanism 24 in the battery cell 7, a part of the substance can be discharged when the internal pressure of the battery cell 7 exceeds a preset value, so as to protect a single battery cell 7. Also, the first conduit 801 of the thermal runaway management assembly 8 may discharge the protective substance to the pressure relief mechanism 24 during thermal runaway of the battery cell 7, so as to timely cool down the high-temperature substance released from the pressure relief mechanism 24. Further, at least a part of the orthographic projection of the first conduit 801 onto the battery cell 7 falls within the range of the pressure relief mechanism 24, so that the substance discharged by the battery cell 7 via the pressure relief mechanism 24 can act on the first conduit 801 quickly, so as to actuate the first conduit 801 timely and improve the efficiency of actuation of the first conduit 801. The protective medium is typically a liquid capable of rapidly mixing and exchanging heat with the substance discharged by the pressure relief mechanism 24. The temperature of the protective medium is much lower than the temperature of the discharged substance, so that the protective medium can rapidly absorb the heat in the discharged substance and rapidly lower the temperature in the battery 2. Thus the above structure reduces a risk of explosion or short circuit of the battery caused by the high-temperature substance, thereby effectively improving the safety performance of the battery.

The above technical solution reduces a damage of the high-temperature substance discharged in the pressure relief mechanism 24 to other normally operating battery cells 7 in the battery 2, and reduces a risk of explosion or short circuit of the battery 2 caused by the high-temperature substance, thereby effectively improving the safety performance of the battery 2.

In an embodiment of the application, the battery 2 includes a plurality of battery cells 7 successively arranged in a first direction X. In the above technical solution, the extending direction of the first conduit 801 is the same as the arrangement direction of the plurality of battery cells 7, and the first conduit 801 can face towards the pressure relief mechanisms of a plurality of battery cells 7 at the same time; in other words, one first conduit 801 can protect a plurality of battery cells 7, thereby improving the safety of the battery 2 and simplifying the structure of the thermal runaway management assembly 8. The first conduit 801 can break when the pressure relief mechanism 24 releases a substance, improving the efficiency of releasing the protective medium, reducing the damage of the high-temperature substance released from the battery cell 7 to other normally operating battery cells 7, and further improving the safety performance of the battery 2.

In an embodiment of the application, the first conduit 801 is made of polypropylene or polyvinyl chloride material. Polypropylene is a polymer formed by addition polymerization of propylene. Polypropylene has a melting point of 189°C and is softened at about 155°C, and the application temperature range thereof is -30~140°C. Polyvinyl chloride is a polymer polymerized from vinyl chloride monomer (VCM) under the action of initiator such as peroxide and azo compound or of light and heat according to mechanism of free-radical polymerization. Polyvinyl chloride has a glass transition temperature of 77~90°C and begins to decompose at about 170°C. The protective medium in the embodiments of the application generally has a temperature falling within the room temperature range (15°C~25°C), and thereby can be stably stored in polypropylene or polyvinyl chloride. On the other hand, the substance sprayed from the pressure relief mechanism 24 has a relatively high temperature, and can directly melt polypropylene or polyvinyl chloride at the high temperature, so that the first conduit 801 is broken at the position corresponding to the pressure relief mechanism 24 to release the protective medium so as to cool down the battery 2. The above material will melt rapidly at a high temperature, and can release the protective medium in time so as to suppress thermal runaway of the battery 2, thereby improving the safety performance of the battery 2.

As shown in Figs. 2 and 5, in the embodiments of the application, the battery 2 includes a plurality of battery units 6 arranged in a second direction Y, each of the battery units 6 includes a plurality of battery cells 7 arranged in the first direction X, and the first direction X and the second direction Y intersect with each other. The amount of the first conduits 801 is plural, and each of the battery units 6 corresponds to at least one of the first conduits 801. In the above technical solution, the plurality of battery cells 7 are arranged in an array, so that the maximum external dimension of the battery 2 can be reduced and the space utilization rate can be improved on condition that the capacity of the battery 2 is consistent. The plurality of first conduits 801 may provide safety protection for the battery cells 7 of the plurality of battery units 6, so as to improve the safety of the battery 2. In the above structure, the first conduit 801 may be arranged in the first direction X to be aligned with the pressure relief mechanism 24 of each battery cell 7, and a plurality of first conduits 801 may be arranged in the second direction Y to prevent mutual interference between the conduits, so that the space inside the battery 2 is effectively utilized, and the volumetric energy density of the battery 2 is ensured while the protection effect is improved.

Please continue to make reference to Figs. 2 and 4, in an embodiment of the application, the plurality of first conduits 801 are disposed in a one-to-one correspondence with the battery units 6. For example, at least one first conduit 801 is correspondingly arranged above each battery unit 6, and the extending path of the first conduit 801 passes through the pressure relief mechanism 24 on each battery cell 7. The plurality of first conduits 801 may be separately sealed or may be communicated with each other to form a communicating conduit. The provision of the plurality of first conduits 801 can increase the storage amount of the protective medium, increase the protective coverage area of the battery cells 7, and improve the protection of the battery 2.

In an embodiment of the application, as shown in Fig. 4, the thermal runaway management assembly 8 further includes a second conduit 802 arranged in the second direction Y, and the second conduit 802 is connected to the ends in the first direction X of two adjacent first conduits 801. In the above structure, the second conduit 802 is provided to connect the first conduits 801, facilitating the protective medium circulating among the plurality of first conduits 801, so that the storage amount of the protective medium in the first conduits 801 can be increased. It will be appreciated that, in comparison with the case where each of the first conduits 801 is separately sealed, when one of the pressure relief mechanisms 24 is actuated and causes the first conduit 801 to break and release the protective medium, the plurality of first conduits 801 in communication with each other can provide more protective medium to the battery 2, and the protection efficiency is higher.

In an embodiment of the application, as shown in Fig. 6, the first conduit 801 includes two strip portions 803 arranged in a third direction Z and an arc portion 804 connected to the ends in the second direction Y of the strip portions 803. Referring to Figs. 2 and 6, at least a part of the strip portions 803 is configured to break at a preset temperature so as to spray the protective medium to the pressure relief mechanism 24, and one of the strip portions 803 is arranged to face towards the pressure relief mechanism 24 in the third direction Z. The third direction Z intersects with the first direction X and the second direction Y respectively. Optionally, each two of the first direction X, the second direction Y and the third direction Z are perpendicular to each other.

The strip portion 803 and the arc portion 804 together enclose a passage for accommodating the protective medium. The strip portion 803 can expand the extension width of the first conduit 801 in the second direction Y, thereby increasing the inner diameter of the first conduit 801 and increasing the medium flow rate of the first conduit 801. The arc portion 804 is used to connect the two strip portions 803, disperse the stress of the fluid in the strip portions 803, increase the flow speed of the protective medium in the first conduit 801, and ensure the timely discharge of the protective medium. Further, the strip portion 803 is arranged to face towards the pressure relief mechanism 24 in the third direction Z, so that the protective medium can be directly sprayed to the pressure relief mechanism 24 for cooling protection. In comparison with the first conduit 801 provided as a circular conduit, the above structure can increase the width of the first conduit 801 in the second direction Y and increase the volume of the first conduit 801. Moreover, the above first conduits 801 are arranged between the battery cells 7 and the case 5, and by the reduced height of the first conduits 801 in the third direction Z, the space inside the case 5 is fully utilized, and the volumetric energy density of the battery 2 is effectively ensured.

In an embodiment of the application, at least a part of the strip portions 803 is configured to break at a preset temperature to spray the protective medium to the pressure relief mechanism 24. Optionally, the first conduit 801 may be prepared with a variety of materials, and the part of the strip portions 803 corresponding to the pressure relief mechanism 24 is prepared with a high-temperature meltable material, so as to ensure that the first conduit 801 is actuated in time to spray the protective medium. The strip portion 803 directly faces towards the pressure relief mechanism 24, and can spray the protective medium directly to the pressure relief mechanism 24 for cooling protection, thereby increasing the speed of the protective medium acting on the pressure relief mechanism 24. Cooling of the battery cell 7 is achieved more rapidly, so that the safety performance of the battery 2 is improved.

In an embodiment of the application, referring to Figs. 6 and 7, the extension width L of the battery cell 7 in the second direction Y and the extension width W of the first conduit 801 in the second direction Y satisfy a relationship of: 0.8W≤L≤W.

In particular, L is the maximum extension width of the battery cell 7 in the second direction Y, which is the linear distance between the farthest opposite ends of the battery cell 7 in the second direction Y The extension width W of the first conduit 801 in the second direction Y is the maximum extension width of the first conduit 801 in the second direction Y, which is the linear distance between the farthest opposite ends of the first conduit 801 in the second direction Y

In some embodiments of the application, if the width of the first conduit 801 in the second direction Y is too narrow, it can not accommodate a sufficient volume of protective medium and can not effectively cover the pressure relief mechanism 24, so that the protection effect of the first conduit 801 cannot meet the requirement; if the width of the first conduit 801 in the second direction Y is too wide, the occupied space will be increased and the flow rate of the protective medium will be increased, resulting in a decrease in the energy density of the battery 2. Therefore, the above technical solution limits the extension width W of the first conduit 801 within a reasonable range, so that the energy density of the battery 2 can be ensured while the protection effect of the first conduit 801 is ensured.

In an embodiment of the application, the maximum height H of the first conduit 801 in the third direction Z and the extension width W of the first conduit 801 in the second direction Y satisfy a relationship of: 3H≤W≤6H.

In some embodiments of the application, H is the maximum extension height of the battery cell 7 in the third direction Z, which is the linear distance between the farthest opposite ends of the battery cell 7 in the third direction Z.

If the extension width W of the first conduit 801 is equal to or less than 3H, the extension width of the first conduit 801 is too small to accommodate enough protective medium, and the protective effect is poor, and if the maximum height of the first conduit 801 in the third direction Z is too large, it will take up the space in the battery 2, reducing the energy density of the battery 2. If the extension width W of the first conduit 801 is equal to or greater than 6H, the extension width of the first conduit 801 is excessively large, causing the reserve of the protective medium to exceed the demand to reduce the energy density of the battery 2, and the fluid resistance in the first conduit 801 becomes larger, reducing the flow speed of the protective medium and deteriorating the protective effect.

The above technical solution can ensure that the first conduit 801 accommodate a sufficient volume of protective medium so as to ensure the cooling speed of the battery cell 7, and meanwhile the height of the first conduit 801 is limited, so that the space occupied by the first conduit 801 is more reasonable, and the energy density of the battery 2 is ensured while the protective effect is improved.

In an embodiment of the application, referring to Figs. 2 and 4, the thermal runaway management assembly 8 further includes first support members 805. The first support members 805 are connected to two ends in the first direction X of the first conduit 801. The first support members 805 are arranged between the battery cells 7 and the first conduit 801 so as to space the first conduit 801 apart from the battery cells 7 by a preset distance. In the above technical solution, by providing the first support members 805, a preset distance is formed between the first conduit 801 and the battery cells 7, so as to provide a space for the pressure relief mechanism 24 to discharge a substance, prevent the pressure relief mechanism 24 from being restricted in actuation and ensure proper operation of the pressure relief mechanism 24.

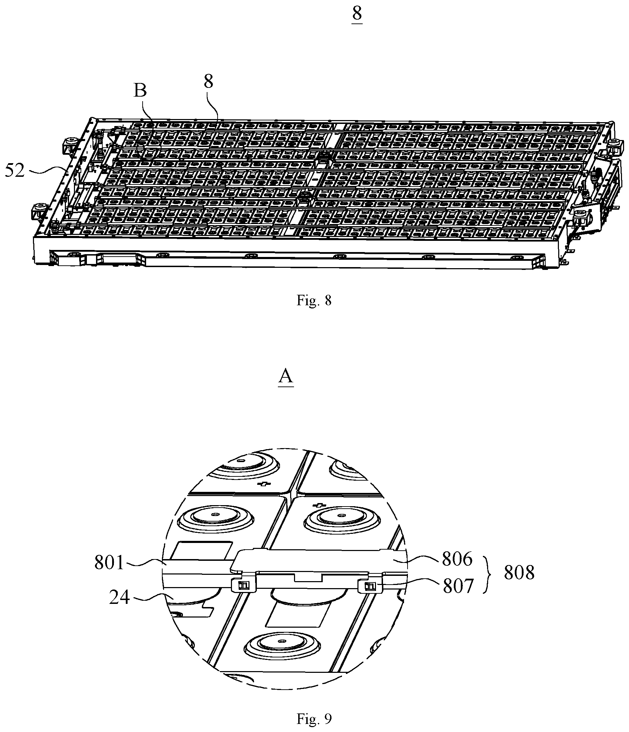

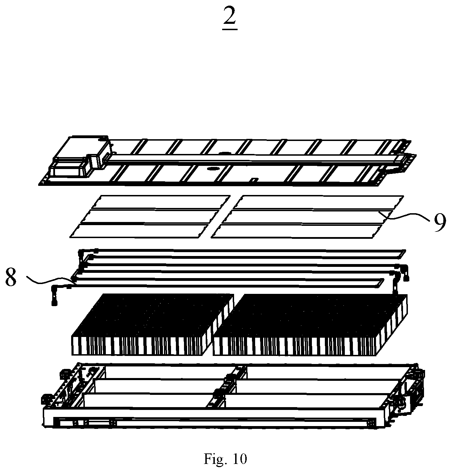

Please continue to make reference to Figs. 8-10. Fig. 8 is a schematic structural view of a thermal runaway management assembly provided by some further embodiments of the application; Fig. 9 is a schematic enlarged view of a circle B of Fig. 8; Fig. 10 is a schematic explosive view of a battery provided by some further embodiments of the application.

As shown in Figs. 8 and 9, in an embodiment of the application, the thermal runaway management assembly 8 further includes a second support member 808 arranged between two first support members 805. The second support member 808 is used to support the first conduit 801. The second support member 808 is used to support the first conduit 801 and restrict the movement of the first conduit 801 towards the battery cell 7.

In an embodiment of the application, the second support 808 includes: a connection portion 806 and a support portion 807. The connection portion 806 extends in the first direction X and is connected to at least a part of the first conduit 801. The support portion 807 is arranged between the battery cell 7 and the first conduit 801, and two ends of the support portion 807 are connected to the connection portion 806 and the battery cell 7 respectively, so as to space the first conduit 801 apart from the battery cell 7 by a preset distance. By providing the second support member 808, the deformation of the first conduit 801 is restricted to a certain extent. Moreover, during installation of the thermal runaway management assembly 8, the first conduit 801 and the second support member 808 may be pre-assembled and then installed into the battery 2, thereby effectively improving the installation efficiency of the thermal runaway management assembly 8.

Optionally, the connection portion 806 is of a strip plate-like structure, and one side of the connection portion 806 is fit to the strip portion 803 of the first conduit 801 facing towards the case 5 of the battery 2. Both sides of the connection portion 806 in the second direction Y are connected to a support portion 807 respectively. The support portion 807 extends in the direction towards the battery cell 7, and an end of the support portion 807 abuts an end surface of the battery cell 7. Moreover, the support portion 807 is connected to the arc portion 804 of the first conduit 801. The spacing distance between the first conduit 801 and the battery cell 7 can be adjusted by adjusting the extension length of the support portion 807 in the third direction Z.

In the above technical solution, the connection portion 806 can be stably connected to the first conduit 801, and the support portion 807 is connected to the connection portion 806 to support the first conduit 801 and the battery cell 7 to be spaced apart from each other by a preset distance. The above structure can facilitate the installation and replacement of the second support member 808.

As shown in Fig. 10, in an embodiment of the application, the battery 2 further includes a thermal management assembly 9 for accommodating a cooling medium for heat exchange of the battery cell 7. The thermal runaway management assembly 8 is in communication with the thermal management assembly 9 and uses the cooling medium as the protective medium.

The thermal management assembly 9 can accommodate the cooling medium which can likewise be used to cool down the substance sprayed from the pressure relief mechanism 24, and thereby the thermal management assembly 9 is in communication with the thermal runaway management assembly 8 and uses the cooling medium for protection, so that the storage amount of liquid in the battery 2 can be reduced, and the convenience of protection is improved while the safety performance of the battery 2 is improved.

Referring to Figs. 2-10, the embodiments of the application provide a battery 2 including a battery cell 7 and a thermal runaway management assembly 8. The battery cell 7 has a pressure relief mechanism 24. The thermal runaway management assembly 8 includes a first conduit 801 made of polypropylene or polyvinyl chloride material. At least a part of an orthographic projection of the first conduit 801 onto the battery cell 7 falls within a range of the pressure relief mechanism 24. The first conduit 801 is used to accommodate a protective medium, and the first conduit 801 is configured to be actuated when the battery cell 7 discharges a substance via the pressure relief mechanism 24, so as to discharge the protective medium towards the pressure relief mechanism 24. The battery 2 includes a plurality of battery cells 7 successively arranged in a first direction X. The battery 2 includes a plurality of battery units 6 arranged in a second direction Y, each of the battery units 6 includes a plurality of battery cells 7 arranged in the first direction X, and the first direction X and the second direction Y intersect with each other.

The amount of the first conduits 801 is plural, and each of the battery units 6 corresponds to at least one of the first conduits 801. The thermal runaway management assembly 8 further includes a second conduit 802 arranged in the second direction Y, and the second conduit 802 is connected to the ends in the first direction X of two adjacent first conduits 801. The first conduit 801 includes two strip portions 803 arranged in a third direction Z and an arc portion 804 connected to the ends in the second direction Y of the strip portions 803. The third direction Z intersects with the first direction X and the second direction Y respectively. At least a part of the strip portions 803 is configured to break at a preset temperature to spray the protective medium to the pressure relief mechanism 24. One of the strip portions 803 is arranged to face towards the pressure relief mechanism 24 in the third direction Z. The extension width L of the battery cell 7 in the second direction Y and the extension width W of the first conduit 801 in the second direction Y satisfy a relationship of: 0.8W≤L≤W.The maximum height H of the first conduit 801 in the third direction Z and the extension width W of the first conduit 801 in the second direction Y satisfy a relationship of: 3H≤W≤6H.

The thermal runaway management assembly 8 further includes first support members 805. The first support members 805 are connected to two ends in the first direction X of the first conduit 801. The first support members 805 are arranged between the battery cells 7 and the first conduit 801 so as to space the first conduit 801 apart from the battery cells 7 by a preset distance. The thermal runaway management assembly 8 further includes a second support member 808 arranged between two first support members 805. The second support member 808 is used to support the first conduit 801. The second support member 808 is used to support the first conduit 801 and restrict the movement of the first conduit 801 towards the battery cell 7. The second support member 808 includes: a connection portion 806 and a support portion 807. The connection portion 806 extends in the first direction X and is connected to at least a part of the first conduit 801. The support portion 807 is arranged between the battery cell 7 and the first conduit 801. Two ends of the support portion 807 are connected to the connection portion 806 and the battery cell 7 respectively, so as to space the first conduit 801 apart from the battery cell 7 by a preset distance. The battery 2 further includes a thermal management assembly 9 for accommodating a cooling medium for heat exchange of the battery cell 7. The thermal runaway management assembly 8 is in communication with the thermal management assembly 9 and uses the cooling medium as the protective medium.

The embodiments of the application further provide an electric device including the battery 2 in the above embodiments, and the battery 2 is used to provide electrical energy. The technical solutions described in the embodiments of the application are applicable to the battery 2 and the electric device employing the battery 2. The electric device may be a vehicle 1, a mobile phone, a portable device, a notebook computer, a ship, a spacecraft, an electric toy and a power tool, etc. The vehicle 1 may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

The electric device in the embodiments of the application includes the battery 2 in the embodiments of the application. The battery 2 has a thermal runaway management assembly 8. By providing the thermal runaway management assembly 8, the substance discharged from the pressure relief mechanism 24 is cooled down, so as to prevent the battery cell 7 from being damaged and improve the safety performance of the battery 2. Therefore, the electric device provided by the embodiments of the application can also achieve the above technical effects, and is not repeated herein.

Although the application has been described with reference to preferred embodiments, it is possible to make various improvements of it and substitute components therein with equivalents without departing from the scope of the application, and in particular, the various technical features mentioned in various embodiments can be combined in any way. The application is not limited to the specific embodiments disclosed herein, but includes all the technical solutions which fall into the scope of the claims.

## Claims

1. A battery, comprising:
a battery cell (7) comprising a pressure relief mechanism (24);
a thermal runaway management assembly (8) comprising a first conduit (801), at least a part of an orthographic projection of the first conduit (801) onto the battery cell (7) falling within a range of the pressure relief mechanism (24); the first conduit (801) being used to accommodate a protective medium, the first conduit (801) being configured to be actuated when the battery cell (7) discharges a substance via the pressure relief mechanism (24), so as to discharge the protective medium towards the pressure relief mechanism (24).

2. The battery according to claim 1, wherein the battery (2) comprises a plurality of said battery cells (7) arranged successively in a first direction (X).

3. The battery according to claim 1 or 2, wherein the first conduit (801) is made of polypropylene or polyvinyl chloride material.

4. The battery according to claim 2, wherein the battery (2) comprises a plurality of battery units (6) arranged in a second direction (Y), each of the battery units (6) comprises a plurality of said battery cells (7) arranged in the first direction (X), and the first direction (X) and the second direction (Y) intersect with each other;
an amount of the first conduits (801) is plural, and each of the battery units (6) corresponds to at least one of the first conduits (801).

5. The battery according to claim 4, wherein the thermal runaway management assembly (8) further comprises a second conduit (802) arranged in the second direction (Y), and the second conduit (802) is connected to ends in the first direction (X) of two adjacent first conduits (801).

6. The battery according to claim 4 or 5, wherein the first conduit (801) comprises two strip portions (803) arranged in a third direction (Z) and an arc portion (804) connected to ends in the second direction (Y) of the strip portions (803), and the third direction (Z) intersects with the first direction (X) and the second direction (Y) respectively; at least a part of the strip portions (803) is configured to break at a preset temperature so as to spray the protective medium to the pressure relief mechanism (24), and the strip portion (803) is arranged to face towards the pressure relief mechanism (24) in the third direction (Z).

7. The battery according to any of claims 4 to 6, wherein an extension width L of the battery cell (7) in the second direction (Y) and an extension width W of the first conduit (801) in the second direction (Y) satisfy a relationship of: 0.8W≤L≤W.

8. The battery according to claim 6, wherein a maximum height H of the first conduit (801) in the third direction (Z) and the extension width W of the first conduit (801) in the second direction (Y) satisfy a relationship of: 3H≤W≤6H.

9. The battery according to any of claims 4-8, wherein the thermal runaway management assembly (8) further comprises first support members (805), the first support members (805) are connected to two ends in the first direction (X) of the first conduit (801), and the first support members (805) are arranged between the battery cells (7) and the first conduit (801) so as to space the first conduit (801) apart from the battery cells (7) by a preset distance.

10. The battery according to claim 9, wherein the thermal runaway management assembly (8) further comprises a second support member (806), the second support member (806) is arranged between two first support members (805), and the second support member (806) is used to support the first conduit (801).

11. The battery according to claim 10, wherein the second support member (806) comprises:
a connection portion (806) extending in the first direction (X) and connected to at least a part of the first conduit (801); and
a support portion (807) arranged between the battery cells (7) and the first conduit (801), two ends of the support portion (807) being connected to the connection portion (806) and the battery cells (7) respectively so as to space the first conduit (801) apart from the battery cells (7) by a preset distance.

12. The battery according to any of claims 1 to 11, wherein the battery further comprises a thermal management assembly (9) for accommodating a cooling medium for heat exchange of the battery cell (7), and the thermal runaway management assembly (8) is in communication with the thermal management assembly (9) and uses the cooling medium as the protective medium.

13. An electric device comprising a battery according to any of claims 1-12, wherein the battery (2) is used to provide electrical energy.
